# DEMANDE DE BREVET EUROPEEN

(11) **EP 4 496 231 A1**
(43) Date de publication de la demande: **22.01.2025**
(21) Numéro de dépôt: 24188168.9
(22) Date de dépôt: 12.07.2024
(51) Int. Cl.: H04B 3/00, H04L 12/40

(54) **DISPOSITIF DE RÉCEPTION POUR BUS BIFILAIRE**

(30) Priorité: 18.07.2023 FR 2307671
(71) Demandeur: STMicroelectronics International N.V., 1228 Plan-les-Ouates, Geneva (CH)
(72) Inventeur: MOENECLAEY, Nicolas, 38210 VOUREY (FR); TROUSSEL, Gilles, 38000 GRENOBLE (FR); TOURNIOL, Christophe, 38450 LE GUA (FR)
(74) Mandataire: Cabinet Beaumont

(57) **Abrégé**

La présente description concerne un dispositif comprenant des premier et deuxième ponts diviseurs résistifs identiques (102, 104) connectés entre un noeud de référence (106) et, respectivement, des premier et deuxième noeuds (108, 110) couplés respectivement à des première et deuxième bornes (100H, 100L), le dispositif comprenant en outre des troisième et quatrième ponts diviseurs résistifs identiques (300, 302) connectés entre un noeud d'alimentation (112) et respectivement les premier et deuxième noeuds. Un circuit de lecture (LECT') du dispositif est connecté à un noeud intermédiaire (116) du deuxième pont (104), à un noeud intermédiaire (114) correspondant du premier pont (102), à un noeud intermédiaire (306) du quatrième pont (302) ; et à un noeud intermédiaire (304) correspondant du troisième pont (300).

## Description

### Domaine technique

La présente description concerne de façon générale les circuits électroniques, par exemple les circuits électroniques intégrés, et, plus particulièrement, les circuits électroniques, ou dispositifs, de réception pour un bus bifilaire différentiel, par exemple de type CAN (de l'anglais "Controller Area Network" - réseau de zone de contrôleur).

### Technique antérieure

De nombreux bus bifilaires différentiels sont connus. Dans ces bus connus, les données numériques, ou bits, transmis sur le bus sont représentés par la tension différentielle entre les deux conducteurs des bus bifilaires. Un exemple d'un tel bus bifilaire différentiel connu est le bus CAN.

Des dispositifs d'émission et/ou de réception de données sont connectés aux deux conducteurs du bus bifilaire différentiel.

En particulier, lorsqu'un tel dispositif est configuré pour lire des données numériques sur le bus, ce dispositif comprend un circuit, ou dispositif, configuré pour lire le bus, qui est connecté aux deux conducteurs du bus.

Dans de tels bus bifilaires différentiels, le potentiel de mode commun du bus peut varier, par exemple lors de décharges électrostatiques (ESD de l'anglais "ElectroStatic Discharge"), par exemple entre -40 V et +40 V.

Ces variations du potentiel de mode commun du bus peuvent rendre inopérant les circuits connus de lecture du bus des dispositifs d'émission et/ou réception de données connectés au bus.

### Résumé de l'invention

Il existe un besoin d'un dispositif de lecture d'un bus bifilaire différentiel qui pallie tout ou partie des inconvénients des dispositifs connus de lecture d'un bus bifilaire différentiel, par exemple de type CAN.

Par exemple, il existe un besoin d'un dispositif de lecture d'un bus bifilaire différentiel, par exemple de type CAN, qui soit robuste aux variations du potentiel de mode commun du bus.

Par exemple, il existe un besoin d'un dispositif de lecture d'un bus bifilaire différentiel, par exemple de type CAN, qui soit robuste aux augmentations du potentiel de mode commun du bus.

Un mode de réalisation pallie tout ou partie des inconvénients des dispositif de lecture connus d'un bus bifilaire différentiel, par exemple de type CAN.

Un mode de réalisation prévoit un dispositif comprenant :
des première et deuxième bornes destinées à être connectées respectivement à des premier et deuxième conducteurs d'un bus bifilaire différentiel ;
des premier et deuxième ponts diviseurs résistifs identiques connectés entre un noeud de référence et, respectivement, des premier et deuxième noeuds couplés respectivement aux première et deuxième bornes ;
des troisième et quatrième ponts diviseurs résistifs identiques connectés entre un noeud d'alimentation et respectivement les premier et deuxième noeuds ; et
un circuit de lecture comprenant :
   des premier et deuxième transistors NMOS ayant leurs grilles connectées entre elles et leurs sources connectées à un noeud intermédiaire du deuxième pont ;
   des troisième et quatrième transistors NMOS ayant leurs grilles connectées entre elles et leurs sources connectées à un noeud intermédiaire correspondant du premier pont ;
   des cinquième et sixième transistors PMOS ayant leurs grilles connectées entre elles et leurs sources connectées à un noeud intermédiaire du quatrième pont ;
   des septième et huitième transistors PMOS ayant leurs grilles connectées entre elles et leurs sources connectées à un noeud intermédiaire correspondant du troisième pont ;
   dans lequel :
      les deuxième et troisième transistors ont leurs drains connectés à une première source de courant ;
      les sixième et septième transistors ont leurs drains connectés à une deuxième source de courant ; et
      le circuit de lecture est configuré pour déterminer un état binaire du bus à partir des courants circulants dans les premier, quatrième, cinquième et huitième transistors.

Selon un mode de réalisation, le noeud de référence est configuré pour recevoir un potentiel de référence et le noeud d'alimentation est configuré pour recevoir un potentiel d'alimentation, de préférence positif par rapport au potentiel de référence.

Selon un mode de réalisation :
chacun des premier et deuxième ponts comprend un premier élément résistif connecté entre le noeud de référence et le noeud intermédiaire dudit pont et un deuxième élément résistif connecté entre le noeud intermédiaire dudit pont et, respectivement, le premier noeud et le deuxième noeud ; et
chacun des troisième et quatrième ponts comprend un troisième élément résistif connecté entre le noeud d'alimentation et le noeud intermédiaire dudit pont et un quatrième élément résistif connecté entre le noeud intermédiaire du pont et, respectivement, le premier noeud et le deuxième noeud.

Selon un mode de réalisation, un rapport de valeur de résistance du premier élément résistif sur la valeur de résistance du deuxième élément résistif est égal à un rapport de valeur de résistance du troisième élément résistif sur la valeur de résistance du quatrième élément résistif.

Selon un mode de réalisation :
dans chacun des premier et deuxième ponts, les premier et deuxième éléments résistifs sont configurés pour que :
   - une tension alternative sur le noeud intermédiaire du premier pont corresponde à une tension alternative sur la première borne divisée par un facteur A, et
   - une tension alternative sur le noeud intermédiaire du deuxième pont corresponde à une tension alternative sur la deuxième borne divisée par le facteur A ;
dans chacun des troisième et quatrième ponts, les troisième et quatrième éléments résistifs sont configurés pour que :
   - une tension alternative sur le noeud intermédiaire du troisième pont corresponde à la tension alternative sur la première borne divisée par le facteur A, et
   - une tension alternative sur le noeud intermédiaire du quatrième pont corresponde à la tension alternative sur la deuxième borne divisée par le facteur A.

Selon un mode de réalisation :
dans chacun des premier et deuxième ponts, la valeur de résistance du premier élément résistif est plus faible que la valeur de résistance du deuxième élément résistif ; et
dans chacun des troisième et quatrième ponts, la valeur de résistance du troisième élément résistif est plus faible que la valeur de résistance du quatrième élément résistif.

Selon un mode de réalisation, un cinquième élément résistif couple le premier noeud à la première borne et un sixième élément résistif identique au cinquième couple le deuxième noeud à la deuxième borne.

Selon un mode de réalisation, le circuit de lecture comprend :
un premier circuit de polarisation configuré pour appliquer un premier potentiel de polarisation aux grilles des premier et deuxième transistors et un deuxième potentiel de polarisation aux grilles des troisième et quatrième transistors, le deuxième potentiel étant différent du premier potentiel ; et
un deuxième circuit de polarisation configuré pour appliquer un troisième potentiel de polarisation aux grilles des cinquième et sixième transistors et un quatrième potentiel de polarisation aux grilles des septième et huitième transistors,
le quatrième potentiel étant différent du troisième potentiel.

Selon un mode de réalisation :
le premier circuit de polarisation comprend :
   - la première source de courant,
   - un septième élément résistif connecté entre le drain et la grille du deuxième transistor,
   - un huitième élément résistif ayant une même valeur de résistance que le septième, connecté entre le drain et la grille du troisième transistor, et
   - une troisième source de courant connectée aux grilles des troisième et quatrième transistors ; et
le deuxième circuit de polarisation comprend :
   - la deuxième source de courant,
   - un neuvième élément résistif connecté entre le drain et la grille du sixième transistor,
   - un dixième élément résistif ayant une même valeur de résistance que le neuvième, connecté entre le drain et la grille du septième transistor, et
   - une quatrième source de courant connectée aux grilles des septième et huitième transistors.

Selon un mode de réalisation, le circuit de lecture comprend :
un premier circuit de recopie de courant configuré pour tirer, sur un noeud de sommation de courant du circuit de lecture, une image d'un courant dans le premier transistor ;
un deuxième circuit de recopie de courant configuré pour fournir, au noeud de sommation de courant, une image d'un courant dans le quatrième transistor ;
un troisième circuit de recopie de courant configuré pour fournir, au noeud de sommation de courant, une image d'un courant dans le cinquième transistor ; et
un quatrième circuit de recopie de courant configuré pour tirer, sur le noeud de sommation de courant, une image d'un courant dans le huitième transistor.

Selon un mode de réalisation :
le premier circuit de recopie de courant comprend un premier miroir de courant à transistors PMOS et un deuxième miroir de courant à transistors NMOS, le premier miroir de courant couplant le drain du premier transistor au deuxième miroir de courant, et le deuxième miroir de courant couplant le premier miroir de courant au noeud de sommation ;
le deuxième circuit de recopie de courant comprend un troisième miroir de courant à transistors PMOS couplant le drain du quatrième transistor au noeud de sommation ;
le troisième circuit de recopie de courant comprend un quatrième miroir de courant à transistors NMOS et un cinquième miroir de courant à transistors PMOS, le quatrième miroir de courant couplant le drain du cinquième transistor au cinquième miroir de courant, et le cinquième miroir de courant couplant le quatrième miroir de courant au noeud de sommation ; et
le quatrième circuit de recopie de courant comprend un sixième miroir de courant à transistors NMOS couplant le drain du huitième transistor au noeud de sommation.

Selon un mode de réalisation, le circuit de lecture comprend un amplificateur transimpédance configuré pour recevoir un courant déterminé par les courants dans les premier, quatrième, cinquième et huitième transistors et pour fournir, à partir du courant reçu, une tension binaire représentative d'une tension différentielle du bus.

Selon un mode de réalisation, le circuit de lecture comprend un amplificateur transimpédance ayant une entrée couplée, de préférence connectée, au noeud de sommation et une sortie configurée pour fournir, à partir d'un courant reçu par son entrée, une tension binaire représentative d'une tension différentielle du bus.

Selon un mode de réalisation, l'amplificateur transimpédance comprend un inverseur et un élément résistif connecté entre une entrée de l'inverseur et une sortie de l'inverseur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un exemple d'un dispositif de lecture d'un bus bifilaire différentiel ;
la figure 2 représente, de manière plus détaillée qu'en figure 1, un exemple d'un circuit du dispositif de la figure 1 ;
la figure 3 représente un exemple de mode de réalisation d'un dispositif de lecture d'un bus bifilaire différentiel ; et
la figure 4 représente, de manière plus détaillée qu'en figure 3, un exemple de mode de réalisation d'un circuit du dispositif de la figure 3.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Dans la description qui suit, l'expression "élément résistif" désigne un élément ayant deux bornes entre lesquelles l'élément résistif à un comportement de résistance et présente donc une valeur de résistance. Un élément résistif correspond par exemple à une seule résistance dont les bornes correspondent aux bornes de l'élément résistif, ou, par exemple, à plusieurs résistances en série entre les bornes de l'élément résistif.

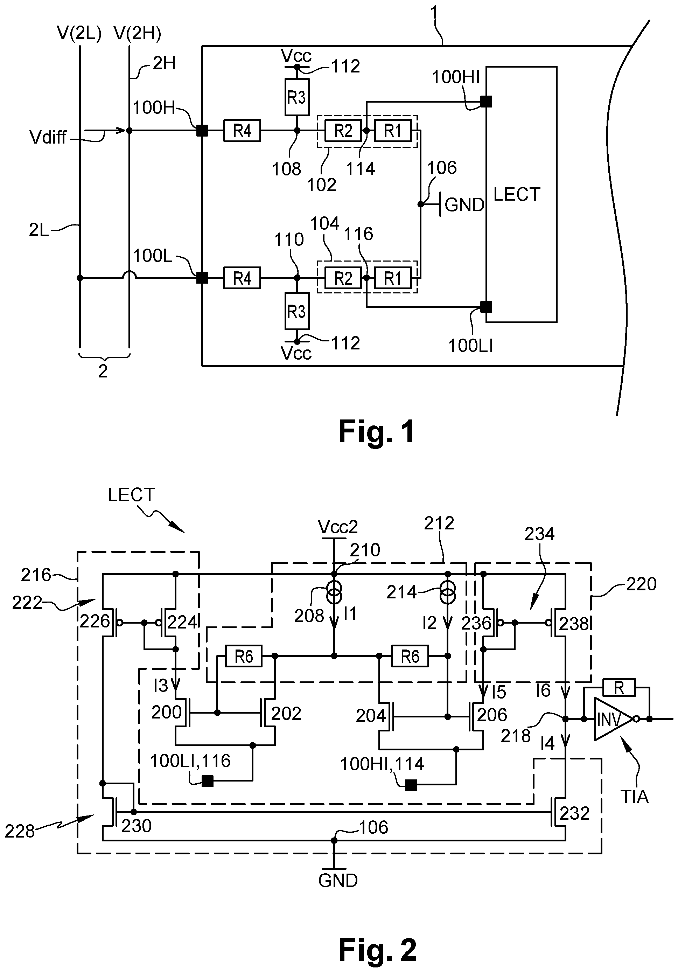

La figure 1 représente un exemple d'un dispositif 1 pour lire un bus bifilaire 2, par exemple de type CAN.

Le bus 2 comprend deux conducteurs, ou lignes conductrices, 2H et 2L. Les données numériques sur le bus sont transmises en faisant varier une tension différentielle Vdiff du bus 2, la tension Vdiff étant égale à V(2H) - V(2L) avec V(2H) le potentiel sur le conducteur 2H et V(2L) le potentiel sur le conducteur 2L.

Le dispositif 1 comprend une borne 100H destinée à être connectée au conducteur 2H du bus 2, la borne 100H étant représentée connectée au conducteur 2H en figure 1. Le dispositif 1 comprend en outre une borne 100L destinée à être connectée au conducteur 2L du bus 2, la borne 100H étant représentée connectée au conducteur 2H en figure 1

Le dispositif 1 comprend deux ponts diviseurs résistifs 102 et 104 identiques. Le pont 102 est connecté entre un noeud 106 de référence et un noeud 108 couplé à la borne 100H. Le pont 104 est connecté entre le noeud 106 et un noeud 110 couplé à la borne 100L.

Le noeud 106 de référence est configuré pour recevoir un potentiel de référence GND, par exemple la masse.

Par exemple, le noeud 108 est couplé à la borne 100H par un élément résistif R4 et le noeud 110 est couplée à la borne 100L par un autre élément résistif R4, les deux éléments R4 ayant une même valeur de résistance. Par exemple, un des éléments R4 a une borne connectée au noeud 108 et une autre borne connectée à la borne 100H, et l'autre des éléments R4 a une borne connectée au noeud 110 et une autre borne connectée à la borne 100L.

Les éléments R4 ont, par exemple, pour fonction de fixer l'impédance vue par le conducteur 2H, respectivement 2L, sur la borne 100H, respectivement 100L.

A titre d'exemple, chacun des éléments R4 a une valeur de résistance environ égale à 12 Kohms lorsque le bus 2 est de type CAN.

Dans l'exemple de la figure 1, le noeud 108 est couplé à un noeud 112 d'alimentation par un élément résistif R3, le noeud 110 étant couplé au noeud 112 par un autre élément résistif R3. Les deux éléments R3 ont une même valeur de résistance.

Le noeud 112 est configuré pour recevoir un potentiel VCC d'alimentation. De préférence, le potentiel VCC est positif par rapport au potentiel GND. Par exemple le potentiel VCC référencé au potentiel GND a une valeur sensiblement égale, de préférence égale, à 5 V.

De préférence, la valeur de résistance de l'élément R3 est égale à la valeur de résistance de chacun des ponts 102 et 104, de sorte qu'un potentiel sur chacun des noeuds 108 et 110 soit égale à VCC/2.

Le pont 102, respectivement 104, comprend un élément résistif R1 connecté entre le noeud 106 et un noeud intermédiaire 114, respectivement 116, du pont 102, respectivement 104. Par exemple, dans le pont 102, respectivement 104, l'élément résistif R1 a une borne connectée au noeud 106 et une autre borne connectée au noeud 114, respectivement 116. Les éléments R1 ont une même valeur de résistance.

En outre, le pont 102, respectivement 104, comprend un élément résistif R2 connecté entre les noeuds 114 et 108, respectivement les noeuds 116 et 110. Par exemple, dans le pont 102, l'élément résistif R2 a une borne connectée au noeud 114 et une autre borne connectée au noeud 108, et, dans le pont 104, l'élément résistif R2 a une borne connectée au noeud 116 et une autre borne connectée au noeud 110. Les éléments R2 ont une même valeur de résistance.

Dans chacun des ponts 102 et 104, les valeurs de résistance des éléments R1 et R2 sont configurées pour qu'une tension alternative sur le noeud 114 du pont 102, respectivement sur le noeud 116 du pont 104, corresponde à la une tension alternative sur la borne 100H, respectivement 100L, divisée par un facteur A. Dit autrement, la tension sur le noeud 114, respectivement 116, a une composante alternative (AC de l'anglais "Alternative Current") qui correspond à la composante alternative de la tension sur la borne 100H, respectivement 100L, divisée par le facteur A. Ainsi, l'amplitude de la composante alternative sur le noeud 114, respectivement 116, est A fois plus faible que celle de la composante alternative sur la borne 100H, respectivement 100L.

A titre d'exemple, le facteur A est supérieur ou égal à 10, par exemple supérieur ou égal à 20, de préférence sensiblement égal à 20.

De plus, dans chacun des ponts 102 et 104, la valeur de résistance de l'élément R1 est plus petite, par exemple au moins dix fois plus petite, que celle de l'élément résistif R2. Ainsi, une tension continue (DC de l'anglais "Direct Current") sur le noeud 114, respectivement 116, c'est à dire la composante DC de la tension sur le noeud 114, respectivement 116, est plus proche de la tension sur le noeud 106 que de la tension DC sur le noeud 108, respectivement 110.

Par exemple, les valeurs de résistance des éléments R1 et R2 sont choisies pour que la composante DC de la tension sur le noeud 114, respectivement 116, appartienne à une plage de valeur de tension allant d'environ -1V jusqu'à environ +2V, même lorsque la tension de mode commun du bus 2 varie dans une plage allant par exemple d'environ -40 V à environ +40 V.

Le dispositif 1 comprend en outre un circuit de lecture LECT. Le circuit LECT comprend une borne 100LI connectée au noeud 116 du pont 104, et une borne 100HI connectée au noeud 114 du pont 102.

Bien que cela ne soit pas illustré en figure 1, et comme cela sera décrit plus en détail sur un exemple de mise en oeuvre illustré en figure 2, le circuit LECT comprend :
- deux transistors NMOS 200 et 202 ayant leurs grilles connectées entre elles et leurs sources connectées au noeud 116 du pont 104 ;
- deux autres transistors NMOS 204 et 206 ayant leurs grilles connectées entre elles et leurs sources connectées au noeud 114 du pont 102 ; et
- une source de courant 208 connectée aux drains des transistors 202 et 204, les drains des transistors 202 et 204 étant connectés l'un à l'autre.

Dans ce circuit LECT, l'état binaire du bus 2, c'est à dire l'état binaire correspondant à la valeur courante de la tension Vdiff du bus 2, est déterminé à partir du courant circulant dans chacun des transistors 200 et 206, par exemple à partir d'une différence entre ces deux courants. Par exemple, pour cela, une tension de polarisation différente est appliquée sur les grilles des transistors 200 et 202 et sur les grilles des transistors 204 et 206.

La figure 2 représente, de manière plus détaillée qu'en figure 1, un exemple du circuit LECT du dispositif 1.

Le circuit LECT comprend, comme cela a été indiqué précédemment en relation avec la figure 1, les transistors NMOS 200, 202, 204 et 206 et la source de courant 208, ces transistors et cette source de courant étant interconnectés entre eux et aux bornes 100LI et 100HI du circuit LECT de la manière décrite en relation avec la figure 1.

Dit autrement, les transistors 200 et 202 forment une première paire différentielle dans laquelle les transistors 200 et 202 sont configurés, ou montés, en source commune, les transistors 204 et 206 formant une deuxième paire différentielle dans laquelle les transistors 204 et 206 sont configurés, ou montés, en source commune. Les première et deuxième paires différentielles sont de type NMOS et sont, par exemple, dites flottantes.

Par exemple, la source de courant 208 est connectée entre les drains des transistors 202 et 204 et un noeud d'alimentation 210. Le noeud 210 est configuré pour recevoir un potentiel d'alimentation VCC2, par exemple positif par rapport au potentiel de référence GND. Par exemple, le potentiel VCC2 est plus faible que le potentiel VCC. Par exemple, le potentiel VCC est sensiblement égal, de préférence égal, à 3,3 V quand le potentiel VCC est sensiblement égal, de préférence égal, à 5 V.

Le potentiel VCC2 constitue le potentiel d'alimentation du circuit LECT.

Le circuit LECT comprend un circuit de polarisation 212 configuré pour appliquer un premier potentiel de polarisation aux grilles de transistors 200 et 202, et un deuxième potentiel de polarisations aux grilles des transistors.

Les premier et deuxième potentiels de polarisation sont différents de sorte que, lorsque les deux bornes 100HI et 100LI sont au même potentiel (tension Vdiff du bus 2 nulle), le courant dans le transistor 202 soit différent de celui dans le transistor 204, le courant dans le transistor 200 étant alors différent de celui dans le transistor 206.

De préférence, les premier et deuxième potentiels de polarisation sont en outre déterminés de sorte que, lorsque le potentiel sur la borne 100HI est supérieur au potentiel sur la borne 100LI (tension Vdiff du bus positive), la relation d'inégalité entre les courants dans les transistors 202 et 204 s'inverse par rapport au cas où les potentiels des bornes 100HI et 100LI sont égaux.

A titre d'exemple, les premier et deuxième potentiels de polarisation sont configurés pour que, lorsque les potentiels des bornes 100HI et 100LI sont égaux, le courant dans le transistor 202 soit alors supérieur au courant dans le transistor 204, et, à l'inverse, lorsque le potentiel sur la borne 100HI est supérieur au potentiel sur la borne 100LI, le courant dans le transistor 202 soit inférieur au courant dans le transistor 204. Dit autrement, lorsque les potentiels des bornes 100HI et 100LI sont égaux, le courant dans le transistor 200 est alors supérieur au courant dans le transistor 206, et, à l'inverse, lorsque le potentiel sur la borne 100HI est supérieur au potentiel sur la borne 100LI, le courant dans le transistor 200 est inférieur au courant dans le transistor 206.

A titre d'exemple alternatif, les premier et deuxième potentiels de polarisation sont configurés pour que, lorsque les potentiels des bornes 100HI et 100LI sont égaux, le courant dans le transistor 202 soit alors inférieur au courant dans le transistor 204, et, à l'inverse, lorsque le potentiel sur la borne 100HI est supérieur au potentiel sur la borne 100LI, le courant dans le transistor 202 soit supérieur au courant dans le transistor 204. Dit autrement, lorsque les potentiels des bornes 100HI et 100LI sont égaux, le courant dans le transistor 200 est alors inférieur au courant dans le transistor 206, et, à l'inverse, lorsque le potentiel sur la borne 100HI est supérieur au potentiel sur la borne 100LI, le courant dans le transistor 200 est supérieur au courant dans le transistor 206.

De préférence, les transistors 202 et 204 ont des dimensions identiques, et en outre, le rapport de dimensions entre les transistors 202 et 200 est égale au rapport de dimensions entre les transistors 204 et 206.

Dans l'exemple de la figure 2, le circuit LECT est configuré pour que le premier potentiel de polarisation soit plus élevé que le deuxième potentiel de polarisation.

Dans l'exemple de figure 2, le circuit de polarisation 212 comprend :
- la source de courant 208,
- un élément résistif R6 connecté entre le drain et la grille du transistor 202,
- un autre élément résistif R6 connecté entre le drain et la grille du transistor 204, les deux éléments R6 ayant une même valeur de résistance, et
- une source de courant 214 connectée aux grilles des transistors 204 et 206.

Par exemple, un des éléments R6 a une borne connectée aux grilles des transistors 200 et 202 et une autre borne connectée aux drains interconnectés des transistors 202 et 204, l'autre des éléments R6 ayant une borne connectée aux grilles des transistors 204 et 206 et une autre borne connectée aux drains interconnectés des transistors 202 et 204.

A titre d'exemple, la source de courant 214 est connectée entre les grilles des transistors 204 et 206, et le noeud 210. Par exemple, la source de courant 214 a une borne connectée au noeud 210 et une autre borne connectée aux drains des transistors 202 et 204.

De préférence, la source de courant 214 délivre un courant I2 ayant une valeur plus faible, par exemple au moins 10 fois plus faible, voire au moins 20 fois plus faible, qu'un courant I1 délivré par la source de courant 208.

A titre d'exemple, la source de courant 208 délivre un courant environ égal à 20 µA, et la source de courant 214 délivre un courant environ égal à 0,9 µA.

La source de courant 214 permet, grâce au courant I2 qu'elle délivre et qui passe dans l'élément résistif connecté entre le drain et la grille du transistor 204, de générer une différence entre le potentiel sur les grilles des transistors 200 et 202 et le potentiel sur les grilles des transistors 204 et 206.

Dans l'exemple de la figure 2, afin de déterminer l'état binaire du bus 2, le circuit LECT comprend un circuit 216 de recopie de courant configuré pour tirer, sur un noeud 218 de sommation de courant du circuit LECT, une image I4 d'un courant I3 dans le transistor 200, et un circuit 220 de recopie de courant configuré pour fournir, au noeud 218, une image I6 d'un courant I5 dans le transistor 206.

Dans la présente description, on appelle "circuit de recopie de courant" un circuit configuré pour fournir un premier courant à partir d'un deuxième courant, le premier courant étant alors appelé "image" du deuxième courant et étant égale au deuxième courant à un facteur multiplicatif près. Par exemple, le courant I4 est l'image du courant I2 et est fourni par le circuit 216.

De préférence, lorsque les transistors 202 et 204 ont les mêmes dimensions et que le rapport de dimensions entre les transistors 202 et 200 est égal au rapport de dimensions entre les transistors 204 et 206, le rapport de la valeur du courant I6 sur la valeur du courant I5 est égal au rapport de la valeur du courant I4 sur la valeur du courant I3.

Le circuit 216 comprend, par exemple comme cela est représenté en figure 2, un miroir de courant 222 à transistors PMOS et un deuxième miroir de courant 228 à transistors NMOS. Le miroir de courant 222 couple le drain du transistor 200 au miroir de courant 228. Le miroir de courant 228 couple le miroir de courant 222 au noeud 218.

A titre d'exemple, le miroir de courant 222 comprend :
- un transistor PMOS 224 ayant son drain connecté à sa grille et au drain du transistor 200, et sa source connectée au noeud 210, et
- un transistor PMOS 226 ayant sa grille connectée à la grille du transistor 224, sa source connectée au noeud 210 et son drain correspondant à une sortie du miroir de courant 222.

Toujours à titre d'exemple, le miroir de courant 228 comprend :
- un transistor NMOS 230 ayant son drain connecté à sa grille et au drain du transistor 226, et sa source connectée au noeud 106, et
- un transistor NMOS 232 ayant sa grille connectée à la grille du transistor 230, sa source connectée au noeud 106, et son drain correspondant à la sortie du miroir de courant 228, le drain du transistor 232 fournissant alors le courant I4 image du courant I3.

Le circuit 220 comprend, par exemple comme cela est représenté en figure 2, un miroir de courant 234 à transistors PMOS. Le miroir de courant 234 couple le drain du transistor 206 au noeud 218.

A titre d'exemple, le miroir de courant 234 comprend :
- un transistor PMOS 236 ayant son drain connecté à sa grille et au drain du transistor 206, et sa source connectée au noeud 210, et
- un transistor PMOS 238 ayant sa grille connectée à la grille du transistor 236, sa source connectée au noeud 210 et son drain correspondant à une sortie du miroir de courant 234, le drain du transistor 238 fournissant alors le courant I6 image du courant I5.

Ainsi, le courant disponible sur le noeud 218 est représentatif de la différence entre les courants I3 et I4, donc de la différence entre le courant dans le transistor 202 et le courant dans le transistor 204, donc de la valeur de tension Vdiff du bus 2.

A titre d'exemple, le circuit de lecture LECT comprend un amplificateur transimpédance TIA. L'amplificateur TIA est configuré pour recevoir un courant déterminé par les courants dans les transistors 202 et 204, et pour fournir, à partir de ce courant reçu, une tension binaire représentative de la tension Vdiff du bus 2.

Par exemple, l'amplificateur TIA a une entrée connectée au noeud 218 et une sortie fournissant la tension binaire représentative de la tension Vdiff.

Par exemple, l'amplificateur TIA comprend un inverseur INV et un élément résistif connecté entre la sortie et l'entrée de l'inverseur.

En se référant de nouveau à la figure 1, lorsque le mode commun du bus 2 diminue par rapport à sa valeur nominale, par exemple égale à 2,5 V, et atteint des fortes valeurs négatives, par exemple une valeur de -40 V, par rapport au potentiel VCC2 pour un exemple de dimensionnement donné des éléments résistifs R1, R2 et R3, la composante DC sur les noeuds 114 et 116, qui est l'image de la tension de mode commun du bus 2, se retrouve alors approximativement égale à -1 V. Les transistors MOS des circuits 216 et 220 sont alors correctement polarisés via les composantes DC des tensions des noeuds 114 et 116 pour que le circuit LECT soit fonctionnel et robuste à cette diminution de la tension de mode commun par rapport à sa valeur nominale.

En revanche, pour ce même exemple de dimensionnement donné, lorsque la tension de mode commun du bus 2 augmente par rapport à sa valeur nominale et atteint des fortes valeurs positives, par exemple une valeur de +40 V, par rapport au potentiel VCC2, la composante DC sur les noeuds 114 et 116 se retrouve alors approximativement égale à 2 V. Les transistors MOS des circuits 216 et 220 ne sont alors plus correctement polarisés via les composantes DC des tensions des noeuds 114 et 116 pour que le circuit LECT soit fonctionnel et robuste à cette augmentation de la tension de mode commun par rapport à sa valeur nominale.

Il est ici proposé un dispositif 3 similaire au dispositif 1 qui comprend un circuit de lecture LECT' similaire au circuit de lecture LECT, qui soit robuste, c'est à dire qui reste fonctionnel, face, non seulement, à des diminutions de la tension de mode commun du bus 2, par exemple jusqu'à des valeurs atteignant -40 V, et, également, à des augmentations de la tension de mode commun du bus 2, par exemple jusqu'à des valeurs atteignant +40 V.

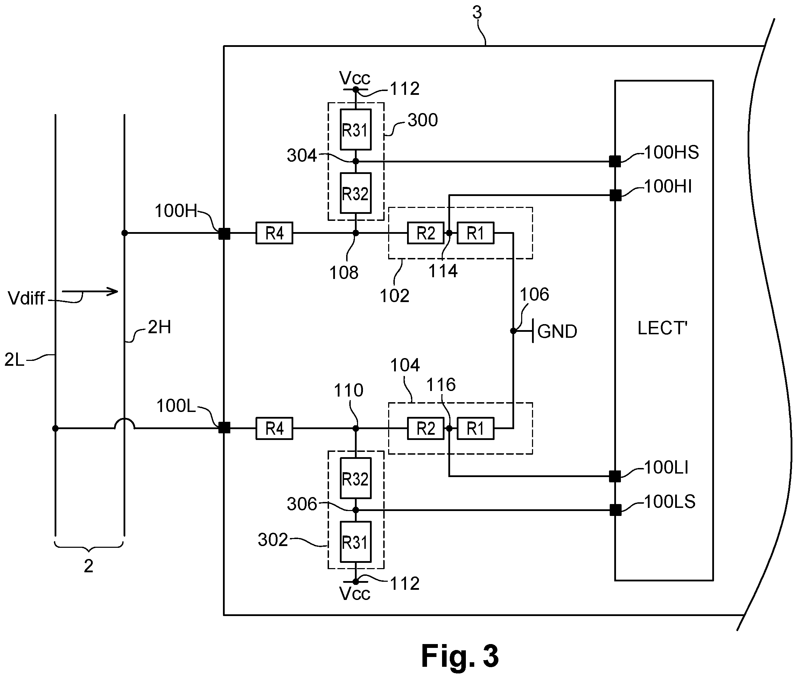

La figure 3 représente un exemple de mode de réalisation d'un tel dispositif 3 de lecture du bus bifilaire différentiel 2.

Le dispositif 3 comprend de nombreux éléments en commun avec le dispositif 1, et seules les différences entre ces dispositifs 1 et 3 sont ici mise en exergue. Ainsi, sauf indication contraire, tous ce qui a été indiqué ou décrit pour le dispositif 1 de la figure 1 s'applique au dispositif 3 de la figure 3.

Par rapport au dispositif 1, dans le dispositif 3 chaque élément résistif R3 est remplacé par un pont diviseur de tension.

Plus particulièrement, l'élément R3 connecté entre les noeuds 108 et 112 dans le dispositif 1 est remplacé par un pont diviseur résistif 300 connecté entre les noeuds 108 et 112 dans le dispositif 3, et l'élément R3 connecté entre les noeuds 110 et 112 dans le dispositif 1 est remplacé par un pont diviseur résistif 302 connecté entre les noeuds 110 et 112 dans le dispositif 3. Les deux ponts résistifs 300 et 302 sont identiques.

Selon un mode de réalisation, la valeur de résistance de chacun des ponts 300 et 302 est égale à la valeur de résistance de l'élément résistif R3 du dispositif 1, ou, dit autrement, la valeur de résistance de chacun des ponts 300 et 302 est égale à la valeur de résistance de chacun des ponts 102 et 104. Ainsi, le potentiel de chacun des noeuds 108 et 110 est égal à VCC/2.

Selon un mode de réalisation, le pont 300, respectivement 302, comprend un élément résistif R31 connecté entre le noeud 112 et un noeud intermédiaire 304, respectivement 306, du pont 300, respectivement 302. Par exemple, dans le pont 300, respectivement 302, l'élément résistif R31 a une borne connectée au noeud 112 et une autre borne connectée au noeud 304, respectivement 306. Les éléments R31 ont une même valeur de résistance. En outre, le pont 300, respectivement 302, comprend un élément résistif R32 connecté entre les noeuds 304 et 108, respectivement les noeuds 306 et 110. Par exemple, dans le pont 300, l'élément résistif R32 a une borne connectée au noeud 304 et une autre borne connectée au noeud 108, et, dans le pont 302, l'élément résistif R32 a une borne connectée au noeud 306 et une autre borne connectée au noeud 110. Les éléments R32 ont une même valeur de résistance.

Selon un mode de réalisation, de manière similaire à ce qui a été décrit pour les ponts 102 et 104, dans chacun des ponts 300 et 302, les valeurs de résistance des éléments R31 et R32 sont configurées pour qu'une tension alternative sur le noeud 304 du pont 300, respectivement sur le noeud 306 du pont 302, corresponde à la tension alternative sur la borne 100H, respectivement 100L, divisée par le facteur A. Dit autrement, la tension sur le noeud 304, respectivement 306, a une composante alternative qui correspond à la composante alternative de la tension sur la borne 100H, respectivement 100L, divisée par le facteur A. Ainsi, l'amplitude de la composante alternative sur le noeud 304, respectivement 306, est A fois plus faible que celle de la composante alternative sur la borne 100H, respectivement 100L.

Selon un mode de réalisation, dans chacun des ponts 300 et 302, la valeur de résistance de l'élément R31 est plus petite, par exemple au moins dix fois plus petite, que celle de l'élément résistif R32. Ainsi, une tension continue sur le noeud 304, respectivement 306, c'est à dire la composante DC de la tension sur le noeud 304, respectivement 306, est plus proche de la tension sur le noeud 112 que de la tension DC sur le noeud 108, respectivement 110.

Par exemple, les valeurs de résistance des éléments R31 et R32 sont choisies pour que la composante DC de la tension sur le noeud 304, respectivement 306, appartienne à une plage de valeur de tension allant d'environ +4 V jusqu'à environ +6 V, même lorsque la tension de mode commun du bus 2 varie dans une plage allant par exemple d'environ -40 V à environ +40 V.

Selon un mode de réalisation, le rapport de la valeur de résistance de chaque élément R1 sur la valeur de résistance de chaque élément R2 est égal au rapport de la valeur de résistance de chaque élément R31 sur la valeur de résistance de chaque élément R32.

Ainsi, selon un mode de réalisation, le rapport R31val/(R31val + R32val) est égal au rapport R1val/(R1val + R2val) avec R31val la valeur de résistance de l'élément R31, R32val la valeur de résistance de l'élément R32, R1val la valeur de résistance de l'élément R1, et R2val la valeur de résistance de l'élément R2.

Par rapport au dispositif 1, comme cela a été indiqué ci-dessus, dans le dispositif 3 le circuit LECT est remplacé par un circuit LECT'.

Le circuit LECT' comprend, comme le circuit LECT, la borne 100LI connectée au noeud 116 du pont 104, et la borne 100HI connectée au noeud 114 du pont 102. En outre, contrairement au circuit LECT, le circuit LECT' comprend une borne 100HS connectée au noeud 304 du pont 300, et une borne 100LS connectée au noeud 306 du pont 302.

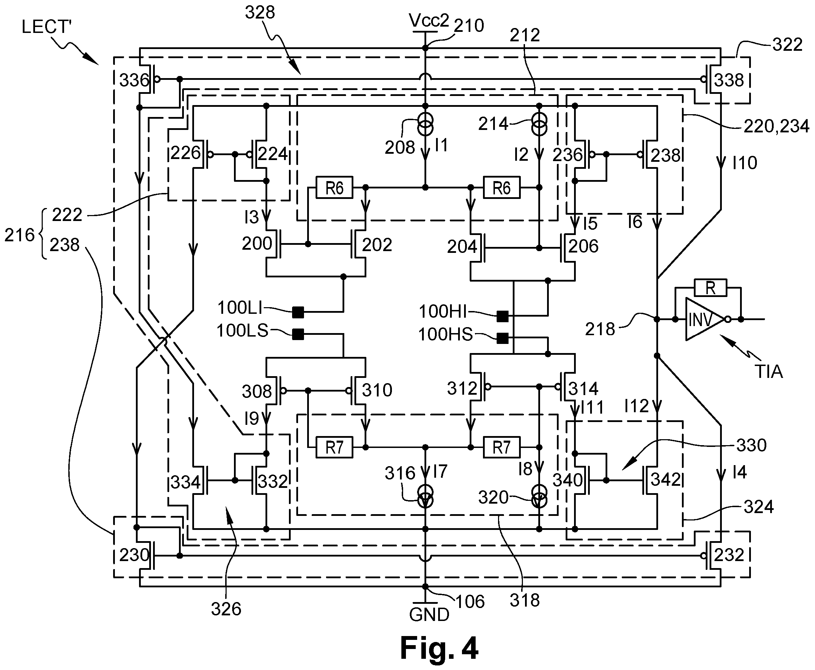

Bien que cela ne soit pas illustré en figure 3, et comme cela sera décrit plus en détail sur un exemple de mise en oeuvre illustré en figure 4, le circuit LECT' comprend :
- les deux transistors NMOS 200 et 202 ayant leurs grilles connectées entre elles et leurs sources connectées au noeud 116 du pont 104, donc à la borne 100LI du circuit LECT' ;
- les deux autres transistors NMOS 204 et 206 ayant leurs grilles connectées entre elles et leurs sources connectées au noeud 114 du pont 102, donc à la borne 100HI du circuit LECT' ;
- la source de courant 208 connectée aux drains des transistors des transistors 202 et 204, les drains des transistors 202 et 204 étant connectés l'un à l'autre ;
- deux transistors PMOS 308 et 310 ayant leurs grilles connectées entre elles et leurs sources connectées au noeud intermédiaire 306 du pont 302, donc à la borne 100LS du circuit LECT' ;
- deux transistors PMOS 312 et 314 ayant leurs grilles connectées entre elles et leurs sources connectées au noeud intermédiaire 304 correspondant du pont 300, donc à la borne 100HS du circuit LECT' ; et
- une source de courant 316 connectée aux drains des transistors 310 et 312, les drains des transistors 310 et 312 étant connectés l'un à l'autre.

Dans ce circuit LECT', l'état binaire du bus 2 est déterminé non seulement à partir du courant circulant dans chacun des transistors 200 et 206, mais aussi à partir du courant circulant dans chacun des transistors 310 et 312.

Par exemple, pour cela, comme dans le circuit LECT, le potentiel de polarisation appliqué sur les grilles des transistors 200 et 202 est différent du potentiel de polarisation appliqué sur les grilles des transistors 204 et 206, et, en outre, un potentiel de polarisation appliqué sur les grilles des transistors 308 et 310 est différent d'un potentiel de polarisation appliqué sur les grilles des transistors 312 et 314.

De préférence, lorsque le potentiel de polarisation appliqué sur les grilles des transistors 200 et 202 est supérieur, respectivement inférieur, au potentiel de polarisation appliqué sur les grilles des transistors 204 et 206, le potentiel de polarisation appliqué sur les grilles des transistors 308 et 310 supérieur, respectivement inférieur, au potentiel de polarisation appliqué sur les grilles des transistors 312 et 314.

Ainsi, lorsque la tension de mode commun du bus 2 diminue par rapport à sa valeur nominale, par exemple jusqu'à des valeurs allant jusqu'à -40 V, le fonctionnement correct du circuit LECT' reste assuré par l'intermédiaire des transistors 200, 202, 204 et 206, et, lorsque la tension de mode commun du bus 2 augmente par rapport à sa valeur nominale, par exemple jusqu'à des valeurs allant jusqu'à +40 V, le fonctionnement correct du circuit LECT' reste assuré par l'intermédiaire des transistors 308, 310, 312 et 314.

Dit autrement, lorsque la tension de mode commun du bus 2 diminue par rapport à sa valeur nominale, par exemple jusqu'à des valeurs allant jusqu'à -40 V, le fonctionnement correct du circuit LECT' reste assuré par l'intermédiaire des composantes continues des tensions des noeuds 114 et 116, et, lorsque la tension de mode commun du bus 2 augmente par rapport à sa valeur nominale, par exemple jusqu'à des valeurs allant jusqu'à +40 V, le fonctionnement correct du circuit LECT' reste assuré par l'intermédiaire des composantes continues des tensions des noeuds 304 et 306.

La figure 4 représente, de manière plus détaillée qu'en figure 3, un exemple de mode de réalisation du circuit LECT' du dispositif 3.

Le circuit LECT' de la figure 4 comprend de nombreux éléments en commun avec le circuit LECT de la figure 2, et seules les différences entre ces circuits LECT et LECT' sont ici mises en exergue. Ainsi, sauf indication contraire, tous ce qui a été indiqué ou décrit pour le circuit LECT s'applique au circuit LECT'.

Le circuit LECT' comprend, comme cela a été indiqué précédemment en relation avec la figure 3, les transistors NMOS 200, 202, 204 et 206 et la source de courant 208, ainsi que les transistors PMOS 308, 310, 312, 314 et la source de courant 316, ces transistors et ces sources de courant étant interconnectés entre eux et aux bornes 100LI, 100HI, 100LS et 100HS du circuit LECT' de la manière décrite en relation avec la figure 3.

Dit autrement, les transistors 200 et 202 forment une première paire différentielle dans laquelle les transistors 200 et 202 sont configurés, ou montés, en source commune, les transistors 204 et 206 forment une deuxième paire différentielle dans laquelle les transistors 204 et 206 sont configurés, ou montés, en source commune, les transistors 308 et 310 forment une troisième paire différentielle dans laquelle les transistors 310 et 308 sont configurés, ou montés, en source commune, et les transistors 312 et 314 forment une quatrième paire différentielle dans laquelle les transistor 312 et 314 sont configurés, ou montés, en source commune. Les première et deuxième paires différentielles sont de type NMOS, les troisième et quatrième paires différentielles étant de type PMOS. Les quatre paires différentielles sont, par exemple, dites flottantes.

Par exemple, la source de courant 208 est connectée entre les drains des transistors 202 et 204 et le noeud d'alimentation 210 configuré pour recevoir le potentiel d'alimentation VCC2.

Par exemple, la source de courant 316 est connectée entre les drains des transistors 310 et 312 et le noeud 106 de référence.

Le potentiel VCC2 constitue le potentiel d'alimentation du circuit LECT'.

Selon un mode de réalisation, le circuit LECT' comprend le circuit de polarisation 212 configuré pour appliquer les premier et deuxième potentiels de polarisation différents aux grilles des transistors 200 et 202 et aux grilles des transistors 204 et 206. En outre, le circuit LECT' comprend un circuit 318 de polarisation. Le circuit 318 est configuré pour appliquer un troisième potentiel de polarisation aux grilles de transistors 308 et 310, et un quatrième potentiel de polarisations aux grilles des transistors 312 et 314.

Les troisième et quatrième potentiels de polarisation sont différents de sorte que, lorsque les deux bornes 100HS et 100LS sont au même potentiel (tension Vdiff du bus 2 nulle), le courant dans le transistor 310 soit différent de celui dans le transistor 312, le courant dans le transistor 308 étant alors différent de celui dans le transistor 314.

De préférence, les troisième et quatrième potentiels de polarisation sont en outre déterminés de sorte que, lorsque le potentiel sur la borne 100HS est supérieur au potentiel sur la borne 100LS (tension Vdiff du bus positive), la relation d'inégalité entre les courants dans les transistors 310 et 312 s'inverse par rapport au cas où les potentiels des bornes 100HS et 100LS sont égaux.

A titre d'exemple, les troisième et quatrième potentiels de polarisation sont configurés pour que, lorsque les potentiels des bornes 100HS et 100LS sont égaux, le courant dans le transistor 310 soit alors supérieur au courant dans le transistor 312, et, à l'inverse, lorsque le potentiel sur la borne 100HS est supérieur au potentiel sur la borne 100LS, le courant dans le transistor 310 soit inférieur au courant dans le transistor 312. Dit autrement, lorsque les potentiels des bornes 100HS et 100LS sont égaux, le courant dans le transistor 308 est alors supérieur au courant dans le transistor 314, et, à l'inverse, lorsque le potentiel sur la borne 100HS est supérieur au potentiel sur la borne 100LS, le courant dans le transistor 308 est inférieur au courant dans le transistor 314.

A titre d'exemple alternatif, les troisième et quatrième potentiels de polarisation sont configurés pour que, lorsque les potentiels des bornes 100HS et 100LS sont égaux, le courant dans le transistor 310 soit alors inférieur au courant dans le transistor 312, et, à l'inverse, lorsque le potentiel sur la borne 100HS est supérieur au potentiel sur la borne 100LS, le courant dans le transistor 310 soit supérieur au courant dans le transistor 312. Dit autrement, lorsque les potentiels des bornes 100HS et 100LS sont égaux, le courant dans le transistor 308 est alors inférieur au courant dans le transistor 314, et, à l'inverse, lorsque le potentiel sur la borne 100HS est supérieur au potentiel sur la borne 100LS, le courant dans le transistor 308 est supérieur au courant dans le transistor 314.

De préférence, les transistors 308 et 310 ont des dimensions identiques, et en outre, le rapport de dimensions entre les transistors 308 et 310 est égal au rapport de dimensions entre les transistors 312 et 314.

Dans l'exemple de la figure 4, le circuit LECT' est configuré pour que le premier potentiel de polarisation appliqué aux grilles des transistors 200 et 202 soit plus élevé que le deuxième potentiel de polarisation appliqué aux grilles des transistors 204 et 206, et, en outre, pour que le troisième potentiel de polarisation appliqué aux grilles des transistors 308 et 310 soit plus élevée que le quatrième potentiel appliqué aux grilles des transistors 312 et 314.

Selon un mode de réalisation, le circuit 212 comprend la source de courant 208, les deux éléments résistifs R6 et la source de courant 214 connectés entre eux de la manière décrite en relation avec la figure 2, et, en outre, le circuit 318 comprend :
- la source de courant 316,
- un élément résistif R7 connecté entre le drain et la grille du transistor 310,
- un autre élément résistif R7 connecté entre le drain et la grille du transistor 312, les deux éléments R7 ayant une même valeur de résistance, et
- une source de courant 320 connectée aux grilles des transistors 312 et 314.

Par exemple, un des éléments R7 a une borne connectée aux grilles des transistors 308 et 310 et une autre borne connectée aux drains interconnectés des transistors 310 et 312, l'autre des éléments R7 ayant une borne connectée aux grilles des transistors 312 et 314 et une autre borne connectée aux drains interconnectés des transistors 310 et 312.

A titre d'exemple, la source de courant 320 est connectée entre les grilles des transistors 312 et 314, et le noeud 106. Par exemple, la source de courant 320 a une borne connectée au noeud 106 et une autre borne connectée aux drains des transistors 312 et 314.

De préférence, la source de courant 320 délivre un courant I8 ayant une valeur plus faible, par exemple au moins 10 fois plus faible, voire au moins 20 fois plus faible, qu'un courant I7 délivré par la source de courant 316.

A titre d'exemple, la source de courant 316 délivre un courant I7 environ égal à 20 µA, et la source de courant 320 délivre un courant I8 environ égal à 0,9 µA.

Par exemple, la source 316 délivre un courant I7 égal au courant I1 délivré par la source 208, et la source 320 délivre un courant I8 égal au courant I2 délivré par la source de courant 214.

La source de courant 320 permet, grâce au courant I8 qu'elle délivre et qui passe dans l'élément résistif R7 connecté entre le drain et la grille du transistor 312, de générer une différence entre le potentiel sur les grilles des transistors 308 et 310 et le potentiel sur les grilles des transistors 312 et 314.

Selon un mode de réalisation, afin de déterminer l'état binaire du bus 2, le circuit LECT' comprend le circuit 216 de recopie de courant, le circuit 220 de recopie de courant, un circuit 322 de recopie de courant configuré pour fournir, au noeud 218, un courant I10 image d'un courant I9 dans le transistor 308, et un circuit 324 de recopie de courant configuré pour tirer, depuis le noeud 218, une image I12 d'un courant I11 dans le transistor 314.

De préférence, lorsque les transistors 310 et 312 ont les mêmes dimensions et que le rapport de dimensions entre les transistors 308 et 310 est égal au rapport de dimensions entre les transistors 312 et 314, le rapport de la valeur du courant I10 sur la valeur du courant I9 est égal au rapport de la valeur du courant I12 sur la valeur du courant I11.

Selon un mode de réalisation, le circuit 216 comprend les miroirs de courant 222 et 238, le circuit 220 comprend le miroir de courant 234, le circuit 322 comprend un miroir de courant 326 à transistors NMOS et un miroir de courant 328 à transistors PMOS, et le circuit 324 comprend un miroir de courant 330 à transistors NMOS.

Le miroir de courant 326 couple le drain du transistor 308 au miroir de courant 328, le miroir de courant 328 couplant le miroir de courant 326 au noeud 218. En outre, le miroir de courant 330 couple le drain du transistor 314 au noeud 218.

A titre d'exemple, le miroir de courant 326 comprend :
- un transistor NMOS 332 ayant son drain connecté à sa grille et au drain du transistor 308, et sa source connectée au noeud 106, et
- un transistor NMOS 334 ayant sa grille connectée à la grille du transistor 332, sa source connectée au noeud 106 et son drain correspondant à une sortie du miroir de courant 326 ; et le miroir de courant 328 comprend :
- un transistor PMOS 336 ayant son drain connecté à sa grille et au drain du transistor 334, et sa source connectée au noeud 210, et
- un transistor PMOS 338 ayant sa grille connectée à la grille du transistor 336, sa source connectée au noeud 210, et son drain correspondant à la sortie du miroir de courant 322, le drain du transistor 338 fournissant alors le courant I10 image du courant I9.

A titre d'exemple, le miroir de courant 330 comprend :
- un transistor NMOS 340 ayant son drain connecté à sa grille et au drain du transistor 314, et sa source connectée au noeud 106, et
- un transistor NMOS 342 ayant sa grille connectée à la grille du transistor 340, sa source connectée au noeud 106 et son drain correspondant à une sortie du miroir de courant 330, le drain du transistor 342 fournissant alors le courant I12 image du courant I11.

Ainsi, le courant disponible sur le noeud 218 est représentatif non seulement de la différence entre les courants I3 et I4, donc de la différence entre le courant dans le transistor 202 et le courant dans le transistor 204, mais également de la différence entre les courants I9 et I11, donc de la différence entre le courant dans le transistor 310 et le courant dans le transistor 312.

Il en résulte que, lorsque la tension de mode commun du bus 2 augmente jusqu'à des valeurs pour lesquelles les circuits 216 et 220, et, en particulier, leurs miroirs de courant respectifs 222 et 234, ne sont plus fonctionnels, les circuits 322 et 324 restent fonctionnels et le courant total disponible sur le noeud 218 reste déterminé par la différence entre les courants I10 et I12 qui est représentative de la valeur de la tension Vdiff du bus 2.

A l'inverse, lorsque la tension de mode commun du bus 2 diminue jusqu'à des valeurs pour lesquelles les circuits 320 et 322, et, en particulier, leurs miroirs de courant respectifs 326 et 330, ne sont plus fonctionnels, les circuits 216 et 220 restent fonctionnels et le courant total disponible sur le noeud 218 reste déterminé par la différence entre les courants I4 et I6 qui est représentative de la valeur de la tension Vdiff du bus 2.

Selon un mode de réalisation, le circuit de lecture LECT' comprend l'amplificateur transimpédance TIA. L'amplificateur TIA est configuré pour recevoir un courant déterminé par les courants dans les transistors 202, 204, 310 et 312 pour fournir, à partir de ce courant reçu, une tension binaire représentative de la tension Vdiff du bus 2.

Selon un mode de réalisation, l'amplificateur TIA a une entrée connectée au noeud 218 et une sortie fournissant la tension binaire représentative de la tension Vdiff.

Selon un mode de réalisation, l'amplificateur TIA comprend un inverseur INV et un élément résistif connecté entre la sortie et l'entrée de l'inverseur.

Des exemples de modes de réalisation ont été décrits ci-dessus en relation avec les figures 3 et 4.

En particulier, des exemples de rapports de dimensions entre les divers transistors ont été donnés mais la présente demande ne se limite pas à ces exemples particuliers et la personne du métier sera en mesure de modifier ces rapports de dimension entre transistors tout en conservant le fonctionnement décrit pour le dispositif 3.

En outre, des exemples particuliers de valeurs des potentiels VCC et VCC2 ont été donnés, en lien avec des exemples particuliers de valeurs négatives et positives de la tension de mode commun du bus 2 pour illustrer le fonctionnement du dispositif 3 et des circuits qui le composent. La encore, la présente demande ne se limite pas à ces exemples particuliers et la personne du métier sera en mesure d'appliquer la présente description à d'autres exemples de valeurs des potentiels VCC et VCC2 et de plages de valeurs pour les variations de la tension de mode commun du bus 2.

Par ailleurs, la personne du métier sera en mesure de prévoir d'autres mises en oeuvre de l'amplificateur TIA et/ou des circuits de polarisation 212 et 318 et/ou des divers circuits de recopie de courant en conservant le fonctionnement décrit ci-dessus pour le dispositif 3. Par exemple, l'amplificateur TIA peut être mis en oeuvre avec un montage à amplificateur opérationnel ayant une entrée inverseuse - couplée au noeud 218 et un élément résistif R connecté entre l'entrée inverseuse - et la sortie de l'amplificateur opérationnel, l'entrée non inverseuse recevant, par exemple, une tension propre à polariser le noeud 218 à un potentiel VCC2/2 comme le fait l'inverseur INV de l'amplificateur TIA décrit précédemment.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus. En particulier, la personne du métier sera en mesure, à partir de la description fonctionnelle faite ci-dessus, de dimensionner les valeurs de résistances des éléments résistifs R1, R2, R31, R32 et, s'ils sont présents, les éléments résistifs R5, de sorte à obtenir le fonctionnement décrit ci-dessus. La personne du métier sera également en mesure, lorsque les circuits de polarisation 212 et 318 sont mis en oeuvre avec les sources de courant 208, 214, 316 et 320, de dimensionner ces sources de courant pour obtenir le fonctionnement décrit.

## Revendications

1. Dispositif comprenant :
des première et deuxième bornes (100H, 100L) destinées à être connectées respectivement à des premier et deuxième conducteurs (2H, 2L) d'un bus bifilaire différentiel (2) ;
des premier et deuxième ponts diviseurs résistifs identiques (102, 104) connectés entre un noeud de référence (106) et, respectivement, des premier et deuxième noeuds (108, 110) couplés respectivement aux première et deuxième bornes (100H, 100L) ;
des troisième et quatrième ponts diviseurs résistifs identiques (300, 302) connectés entre un noeud d'alimentation et respectivement les premier et deuxième noeuds ; et
un circuit de lecture (LECT') comprenant :
des premier et deuxième transistors NMOS (200, 202) ayant leurs grilles connectées entre elles et leurs sources connectées à un noeud intermédiaire (116) du deuxième pont (104) ;
des troisième et quatrième transistors NMOS (204, 206) ayant leurs grilles connectées entre elles et leurs sources connectées à un noeud intermédiaire (114) correspondant du premier pont (102) ;
des cinquième et sixième transistors PMOS (308, 310) ayant leurs grilles connectées entre elles et leurs sources connectées à un noeud intermédiaire (306) du quatrième pont (302) ;
des septième et huitième transistors PMOS (312, 314) ayant leurs grilles connectées entre elles et leurs sources connectées à un noeud intermédiaire (304) correspondant du troisième pont (300) ;
dans lequel :
les deuxième et troisième transistors (202, 204) ont leurs drains connectés à une première source de courant (208) ;
les sixième et septième transistors (310, 312) ont leurs drains connectés à une deuxième source de courant (316) ; et
le circuit de lecture est configuré pour déterminer un état binaire du bus à partir des courants circulants dans les premier, quatrième, cinquième et huitième transistors (200, 206, 308, 314).

2. Dispositif selon la revendication 1, dans lequel le noeud de référence (106) est configuré pour recevoir un potentiel de référence (GND) et le noeud d'alimentation (112) est configuré pour recevoir un potentiel d'alimentation (VCC), de préférence positif par rapport au potentiel de référence.

3. Dispositif selon la revendication 1 ou 2, dans lequel :
chacun des premier et deuxième ponts (102, 104) comprend un premier élément résistif (R1) connecté entre le noeud de référence (106) et le noeud intermédiaire (114, 116) dudit pont et un deuxième élément résistif (R2) connecté entre le noeud intermédiaire (114, 116) dudit pont et, respectivement, le premier noeud (108) et le deuxième noeud (110) ; et
chacun des troisième et quatrième ponts comprend un troisième élément résistif (R31) connecté entre le noeud d'alimentation (210) et le noeud intermédiaire (304, 306) dudit pont et un quatrième élément résistif (R32) connecté entre le noeud intermédiaire du pont et, respectivement,
le premier noeud (108) et le deuxième noeud (110).

4. Dispositif selon la revendication 3, dans lequel un rapport de valeur de résistance du premier élément résistif (R1) sur la valeur de résistance du deuxième élément résistif (R2) est égal à un rapport de valeur de résistance du troisième élément résistif (R31) sur la valeur de résistance du quatrième élément résistif (R32).

5. Dispositif selon la revendication 3 ou 4, dans lequel :
dans chacun des premier et deuxième ponts (102, 104), les premier et deuxième éléments résistifs (R1, R2) sont configurés pour que :
- une tension alternative sur le noeud intermédiaire (114) du premier pont (102) corresponde à une tension alternative sur la première borne (100H) divisée par un facteur A, et
- une tension alternative sur le noeud intermédiaire (116) du deuxième pont (104) corresponde à une tension alternative sur la deuxième borne (100L) divisée par le facteur A ;
dans chacun des troisième et quatrième ponts (300, 302),
les troisième et quatrième éléments résistifs (R31, R32) sont configurés pour que :
- une tension alternative sur le noeud intermédiaire (304) du troisième pont (300) corresponde à la tension alternative sur la première borne (100H) divisée par le facteur A, et
- une tension alternative sur le noeud intermédiaire (306) du quatrième pont (302) corresponde à la tension alternative sur la deuxième borne (100L) divisée par le facteur A.

6. Dispositif selon l'une quelconque des revendications 3 à 5, dans lequel :
dans chacun des premier et deuxième ponts (102, 104), la valeur de résistance du premier élément résistif (R1) est plus faible que la valeur de résistance du deuxième élément résistif (R2) ; et
dans chacun des troisième et quatrième ponts (300, 302),
la valeur de résistance du troisième élément résistif (R31) est plus faible que la valeur de résistance du quatrième élément résistif (R32).

7. Dispositif selon l'une quelconque des revendications 1 à 6, dans lequel un cinquième élément résistif (R4) couple le premier noeud (108) à la première borne (100H) et un sixième élément résistif (R4) identique au cinquième couple le deuxième noeud (110) à la deuxième borne (100L).

8. Dispositif selon l'une quelconque des revendications 1 à 7, dans lequel le circuit de lecture (LECT') comprend :
un premier circuit de polarisation (212) configuré pour appliquer un premier potentiel de polarisation aux grilles des premier et deuxième transistors (200, 202) et un deuxième potentiel de polarisation aux grilles des troisième et quatrième transistors (204, 206), le deuxième potentiel étant différent du premier potentiel ; et
un deuxième circuit de polarisation (318) configuré pour appliquer un troisième potentiel de polarisation aux grilles des cinquième et sixième transistors (308, 310) et
un quatrième potentiel de polarisation aux grilles des septième et huitième transistors (312, 314), le quatrième potentiel étant différent du troisième potentiel.

9. Dispositif selon la revendication 8, dans lequel :
le premier circuit de polarisation (212) comprend :
- la première source de courant (208),
- un septième élément résistif (R6) connecté entre le drain et la grille du deuxième transistor (202),
- un huitième élément résistif (R6) ayant une même valeur de résistance que le septième, connecté entre le drain et
la grille du troisième transistor (204), et
- une troisième source de courant (214) connectée aux grilles des troisième et quatrième transistors (204, 206) ; et
le deuxième circuit de polarisation comprend :
- la deuxième source de courant (316),
- un neuvième élément résistif (R7) connecté entre le drain et la grille du sixième transistor (310),
- un dixième élément résistif (R7) ayant une même valeur de résistance que le neuvième, connecté entre le drain et
la grille du septième transistor (312), et
- une quatrième source de courant (320) connectée aux grilles des septième et huitième transistors.

10. Dispositif selon l'une quelconque des revendications 1 à 9, dans lequel le circuit de lecture (LECT') comprend :
un premier circuit (216) de recopie de courant configuré pour tirer, sur un noeud (218) de sommation de courant du circuit de lecture, une image (I4) d'un courant (I3) dans le premier transistor (200) ;
un deuxième circuit (220) de recopie de courant configuré pour fournir, au noeud (218) de sommation de courant, une image (I6) d'un courant (I5) dans le quatrième transistor (206) ;
un troisième circuit (322) de recopie de courant configuré pour fournir, au noeud (218) de sommation de courant, une image (I10) d'un courant (I9) dans le cinquième transistor (308) ; et
un quatrième circuit (324) de recopie de courant configuré pour tirer, sur le noeud (218) de sommation de courant, une image (I12) d'un courant (I11) dans le huitième transistor (314) .

11. Dispositif selon la revendication 10, dans lequel :
le premier circuit (216) de recopie de courant comprend un premier miroir de courant (222) à transistors PMOS (224, 226) et un deuxième miroir de courant (238) à transistors NMOS (230, 232), le premier miroir de courant couplant le drain du premier transistor (200) au deuxième miroir de courant (238), et le deuxième miroir de courant couplant le premier miroir de courant (222) au noeud (218) de sommation ;
le deuxième circuit (220) de recopie de courant comprend un troisième miroir de courant (234) à transistors PMOS (236, 238) couplant le drain du quatrième transistor (238) au noeud de sommation (218) ;
le troisième circuit (322) de recopie de courant comprend un quatrième miroir de courant (326) à transistors NMOS (332, 334) et un cinquième miroir de courant (328) à transistors PMOS (336, 338), le quatrième miroir de courant couplant le drain du cinquième transistor (308) au cinquième miroir de courant (328), et le cinquième miroir de courant couplant le quatrième miroir de courant (326) au noeud (218) de sommation ; et
le quatrième circuit (324) de recopie de courant comprend un sixième miroir de courant (330) à transistors NMOS (340, 342) couplant le drain du huitième transistor (314) au noeud (218) de sommation.

12. Dispositif selon l'une quelconque des revendications 1 à 10, dans lequel le circuit de lecture comprend un amplificateur transimpédance (TIA) configuré pour recevoir un courant déterminé par les courants (I3, I5, I9, I11) dans les premier, quatrième, cinquième et huitième transistors (200, 206, 308, 314) et pour fournir, à partir du courant reçu, une tension binaire représentative d'une tension différentielle (Vdiff) du bus (2).

13. Dispositif selon la revendication 11, dans lequel le circuit de lecture comprend un amplificateur transimpédance (TIA) ayant une entrée couplée, de préférence connectée, au noeud (218) de sommation et une sortie configurée pour fournir, à partir d'un courant reçu par son entrée, une tension binaire représentative d'une tension différentielle (Vdiff) du bus (2).

14. Dispositif selon la revendication 12 ou 13, dans lequel l'amplificateur transimpédance (TIA) comprend un inverseur (INV) et un élément résistif (R) connecté entre une entrée de l'inverseur et une sortie de l'inverseur.
